# DEMANDE DE BREVET EUROPEEN

(11) **EP 0 610 132 A1**
(43) Date de publication de la demande: **10.08.1994**
(21) Numéro de dépôt: 94400212.0
(22) Date de dépôt: 01.02.1994
(51) Int. Cl.: G06K 1/12, G06K 7/08

(54) **Ensemble pour l'écriture magnétique d'un message codé de précision sur un document porteur d'une piste d'écriture magnétique**

(30) Priorité: 04.02.1993 FR 9301210
(71) Demandeur: COMPAGNIE GENERALE D'AUTOMATISME CGA-HBS, F-91220 Brétigny sur Orge (FR)
(72) Inventeur: Carcenac de Torne, Bernard, F-91510 Janville sur Juine (FR)
(74) Mandataire: Gosse, Michel

(57) **Abrégé**

L'ensemble s'applique dans le cas où le document (1) porte, outre la piste d'écriture (4), une piste pré-encodée de synchronisation (5) permettant la synchronisation des signaux d'écriture. L'ensemble comporte donc une tête magnétique d'écriture (E) équipée d'un enroulement d'écriture, une tête magnétique de lecture (Lₕ) lisant ladite piste pré-encodée, équipée d'un enroulement de lecture et est caractérisé en ce qu'il comporte en outre une tête magnétique auxiliaire (Tₐ) équipée d'un roulement électrique, cette tête étant disposée symétriquement de la tête d'écriture (E) par rapport à l'axe (5) de la piste pré-encodée de synchronisation, les enroulements des têtes d'écriture (E) et auxiliaire (Tₐ) recevant le même courant et le sens de passage respectif de ce courant dans ces deux têtes étant déterminé de façon à produire au niveau de l'entrefer (13) de la tête de synchronisation (Lₕ) un champ de même intensité mais de sens opposé.

## Description

La présente invention concerne un ensemble pour l'écriture magnétique d'un message de grande précision sur un document porteur d'une piste d'écriture magnétique.

L'usage des tickets et cartes magnétiques est de plus en plus répandu et probablement appelé à un usage croissant et diversifié.

L'invention s'applique tout à fait spécialement dans le cas de l'entraînement manuel de la carte dans le dispositif de lecture-écriture, mais également dans le cas d'entraînement motorisé si une piste magnétique de lecture de synchronisation est utilisé pour la synchronisation des signaux d'écriture.

Il est en effet nécessaire de respecter la localisation spatiale précise, selon les normes, des signaux inscrits par la tête d'écriture le long de la piste de la carte.

Cela ne peut se faire, lorsque le déplacement est manuel qu'à partir d'une information caractérisant en temps réel le mouvement de la carte.

Cette information peut être obtenue par différents moyens annexes, mais la solution connue, la plus sûre est d'utiliser sur la carte elle-même, une piste magnétique de synchronisation, également dite d'horloge, parallèle à la piste à écrire. Cette première piste peut d'ailleurs fournir, outre le signal d'horloge caractérisant l'avance de la carte, une information permanente associée au signal d'horloge si on utilise comme codage, un code auto-porteur de son signal d'horloge tel que par exemple le code biphase ou bifréquence.

Cette synchronisation de l'écriture par un moyen caractérisant l'avancement de la carte, nécessaire en déplacement manuel, peut aussi être utilisé dans l'entraînement motorisé, soit que cet entraînement n'assure pas une vitesse parfaitement constante, soit que la tolérance de densité d'écriture est très étroite.

Par ailleurs, on sait que l'on a un grand intérêt à utiliser des pistes magnétiques à haute coercitivité de l'ordre de 4000 Oersted plutôt que des pistes à basse coercitivité de l'ordre de 300 Oersted, les pistes à haute coercitivité assurant une bien meilleure immunité contre les tentatives de fraude ou même contre les modifications accidentelles de l'aimantation de la piste.

Cependant, la conséquence nécessaire des pistes magnétiques à haute coercitivité est que cela implique une augmentation très importante du champ magnétique nécessaire pour polariser à saturation la piste magnétique pendant l'écriture. A titre indicatif, une piste magnétique de coercitivité de 300 Oersted nécessite un courant d'environ 60 à 90 mA tandis qu'une piste de coercitivité de 4000 Oersted nécessite un courant d'environ 1,4 A soit 15 fois plus dans les mêmes conditions. Il en résulte que l'augmentation du champ magnétique d'écriture s'accompagne d'un début de saturation des pièces polaires de la tête d'écriture, d'où un champ de fuite important qui est environ 20 fois celui des têtes travaillant pour l'écriture sur des pistes à faible coercitivité.

Le problème est alors le suivant : Afin que la piste d'écriture puisse être utilisée sur toute sa longueur, il faut que la tête qui lit la piste d'horloge soit situé, par rapport à la piste d'écriture, au droit de la tête d'écriture, donc au voisinage de celle-ci et le flux de fuite élevé qui est nécessaire pour obtenir le champ magnétique d'écriture vient perturber la lecture de la piste de synchronisation par la tête de lecture.

La présente invention a pour but de proposer une solution efficace pour que l'on puisse correctement lire ladite piste d'horloge chaque fois que la tête de lecture de synchronisation est perturbée par le champ de fuite de la tête d'écriture.

L'invention s'applique donc particulièrement au cas où la piste d'écriture est à haut champ coercitif mais elle s'applique également dans tous les cas, car même lorsqu'une plus faible coercitivité de la piste exige une plus faible puissance envoyée sur la tête d'écriture, elle engendre néanmoins un flux de fuite qui peut perturber la tête de lecture et le rapport signal utile sur bruit peut alors n'être pas suffisant pour garantir la précision d'écriture requise.

L'invention a ainsi pour objet un ensemble pour l'écriture magnétique d'un message codé de précision sur un document porteur d'une piste d'écriture magnétique, l'écriture étant effectuée à saturation sous la forme d'un code binaire, comportant une tête magnétique d'écriture comprenant un circuit magnétique à entrefer équipé d'un enroulement d'écriture recevant les signaux électriques d'écriture, l'envoi desdits signaux étant synchronisé par le moyen d'une tête magnétique de lecture comportant un circuit magnétique à entrefer équipé d'un enroulement de lecture, ladite tête de lecture lisant une piste magnétique pré-encodée de telle sorte qu'on puisse en extraire des signaux de synchronisation, lesdites pistes magnétiques d'écriture et pré-encodée étant parallèles et voisines l'une de l'autre, caractérisé en ce qu'il comporte en outre une tête magnétique auxiliaire comportant un circuit magnétique à entrefer équipé d'un enroulement électrique, la tête magnétique auxiliaire étant disposée symétriquement de la tête magnétique d'écriture par rapport à l'axe de ladite piste magnétique pré-encodée, lesdites têtes d'écriture et auxiliaire étant identiques et leur enroulement respectif recevant le même courant, le sens de passage respectif dudit courant dans l'enroulement respectif de ces deux têtes magnétiques étant déterminé de façon à produire respectivement, au niveau de l'entrefer de la tête de lecture, un champ de même intensité et de sens opposé.

On va maintenant donner la description d'un exemple de mise en oeuvre de l'invention en se rapportant au dessin annexé dans lequel :

La figure 1 est une vue schématique montrant la disposition des différentes têtes magnétiques d'un lecteur enregistreur complet comportant l'ensemble pour l'écriture magnétique selon l'invention.

La figure 2 est une vue partielle agrandie de la figure 1.

La figure 3 est un schéma du montage électrique de l'ensemble pour l'écriture magnétique selon l'invention.

La figure 4 est une vue schématique en coupe selon IV-IV de la figure 2 montrant les têtes magnétiques de l'ensemble pour l'écriture selon l'invention, à l'intérieur du bloc support.

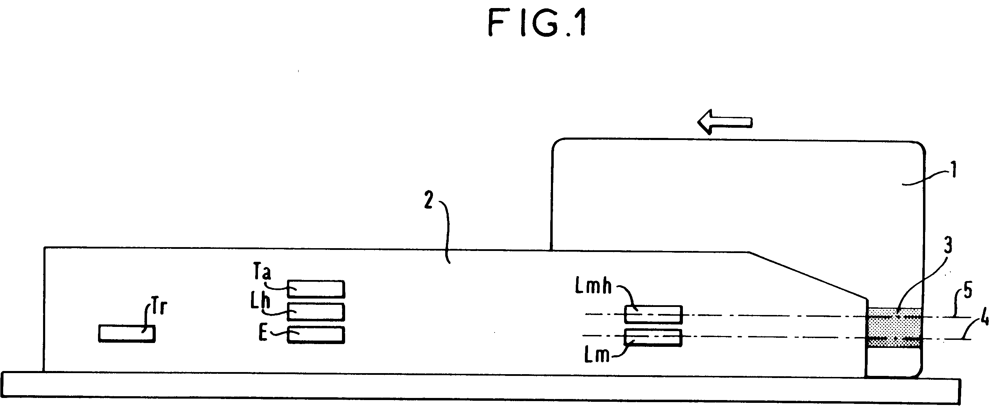

En se reportant à la figure 1, on voit un lecteur enregistreur pour une carte 1. Il s'agit par exemple d'un lecteur-enregistreur 2 qui fonctionne à entraînement manuel de la carte 1. Celle-ci comporte une zone 3 sur laquelle a été déposée une encre magnétique.

Cette zone magnétique 3 est utilisée selon deux plages longitudinales d'axes 4 et 5 définissant une piste d'écriture pour la plage d'axe 4 et une piste de synchronisation pour la plage d'axe 5. Bien entendu, les deux pistes pourraient être physiquement séparées par une zone ne comportant pas d'encre magnétique, cependant, il est généralement plus simple de n'effectuer qu'une seule zone encrée indistincte.

Dans le cas de l'exemple décrit, la piste magnétique de synchronisation, d'axe 5, ne comporte pas seulement un simple signal d'horloge mais également une information permanente écrite dans un système de codage auto-porteur de son signal d'horloge, par exemple dans le système de codage biphase ou bifréquence. Cela ne change rien à l'invention.

On voit ainsi un lecteur-enregistreur 2 qui comporte une tête de lecture Lm pour la lecture préalable du message enregistré sur la piste d'écriture d'axe 4, une tête de lecture Lmh pour la lecture préalable du message permanent enregistré sur la piste de synchronisation d'axe 5, une tête d'écriture E pour écrire un message sur la piste d'écriture d'axe 4, une tête de lecture Lₕ pour la lecture simultanée de la piste de synchronisation d'axe 5 pour en extraire le signal d'horloge afin de permettre la commande de la tête d'écriture E, une tête magnétique auxiliaire Tₐ conformément à l'invention dont le but est donc de produire au niveau de l'entrefer de la tête de lecture Lₕ un champ magnétique de même intensité que celui produit au même endroit par la tête d'écriture E, mais de sens opposé, et enfin une tête de relecture Tᵣ de façon à vérifier que le message écrit par la tête d'écriture E est bien conforme à ce que l'on souhaite.

Dans le cas de l'exemple décrit, il est supposé qu'un message est préalablement écrit sur la piste d'écriture d'axe 4, qu'il est lu initialement par la tête de lecture Lₘ et qu'il est ensuite modifié par la tête d'écriture E compte tenu de l'information donnée par cette lecture. L'invention peut s'appliquer tout aussi bien si l'on souhaite inscrire un message alors que la piste d'écriture d'axe 4 ne comportait aucun message préalable. En revanche, la piste de synchronisation d'axe 5 doit, préalablement à l'écriture par la tête E, contenir dès l'origine un code de synchronisation puisque pour écrire, la tête E doit être synchronisée par la tête Lₕ.

La tête magnétique auxiliaire Tₐ est physiquement identique à la tête d'écriture E et elle est disposée symétriquement de la tête d'écriture E par rapport à l'axe 5 de la piste de lecture de synchronisation,

En outre et comme c'est le cas dans l'exemple décrit, les trois têtes E, Lₕ et Tₐ sont de préférence alignés ce qui permet de disposer de la synchronisation sur toute la longueur de la piste.

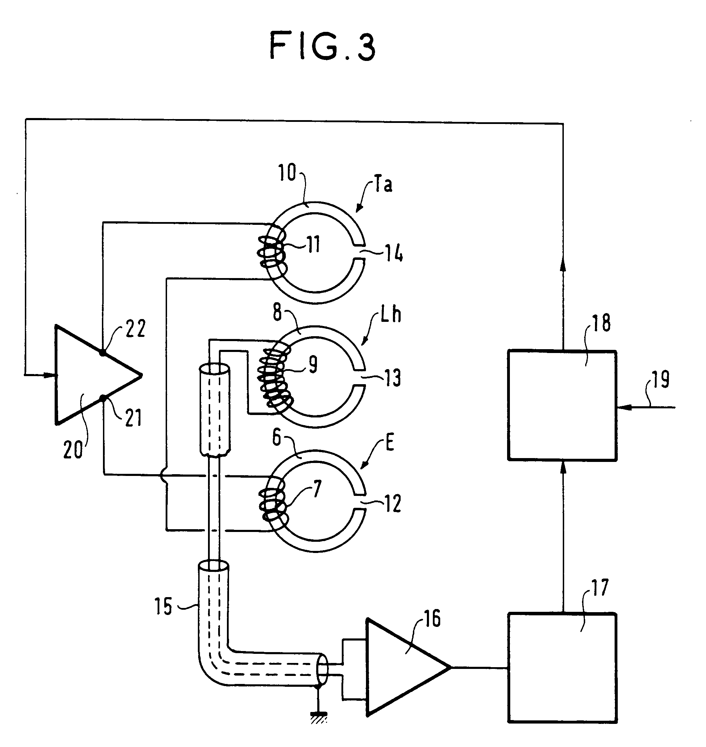

La figure 3 montre le montage électrique. Sur cette figure, on a représenté les trois têtes magnétiques d'écriture E, de lecture du signal d'horloge Lₕ et auxiliaire Tₐ avec leur circuit magnétique et leur enroulement respectif : 6, 7; 8, 9 et 10, 11. Bien entendu, dans la réalité, les trois circuits magnétiques 6, 8 et 10 ne sont pas orientés comme on le voit sur la figure mais comme ils le seraient si l'on faisait pivoter chaque circuit de 90° autour d'un axe horizontal , dans le plan de la figure et passant par l'entrefer, les deux entrefer 12 et 14 étant alignés et perpendiculaires à l'axe de la piste 5. Comme il est dit ci-dessus, de préférence et comme c'est le cas dans l'exemple décrit, l'entrefer 13 est également aligné avec les entrefers 12 et 14.

L'enroulement de lecture 9 de la tête de lecture de synchronisation Lₕ est relié par un câble blindé 15 à un amplificateur de signaux 16 dont la sortie est reliée à un circuit 17 détecteur de transition magnétiques élaborant les signaux de synchronisation ou d'horloge envoyés vers un générateur de signaux d'écriture 18 qui reçoit par ailleurs en 19 des signaux de commande d'état logique du message à écrire sur la piste magnétique d'écriture d'axe 4. En sortie du générateur 18, sont envoyés sur un amplificateur d'écriture 20, les ordres du sens de passage du courant dans les enroulements 7 et 11 de la tête magnétique d'écriture E et de la tête magnétique auxiliaire Tₐ. Les deux sorties 21 et 22 de l'amplificateur 20 sont reliés aux enroulements 7 et 11 qui sont disposés en série.

Bien entendu, la liaison en série de ces deux enroulements est faite de telle sorte que le sens respectif du courant dans les deux enroulements est tel qu'il produit respectivement de la part des têtes E et Tₐ un champ de fuite au niveau de l'entrefer 13 de la tête de lecture Lₕ qui soit dans un sens opposé l'un de l'autre, et bien entendu de même intensité puisque les têtes E et Tₐ sont identiques et alimentés par le même courant.

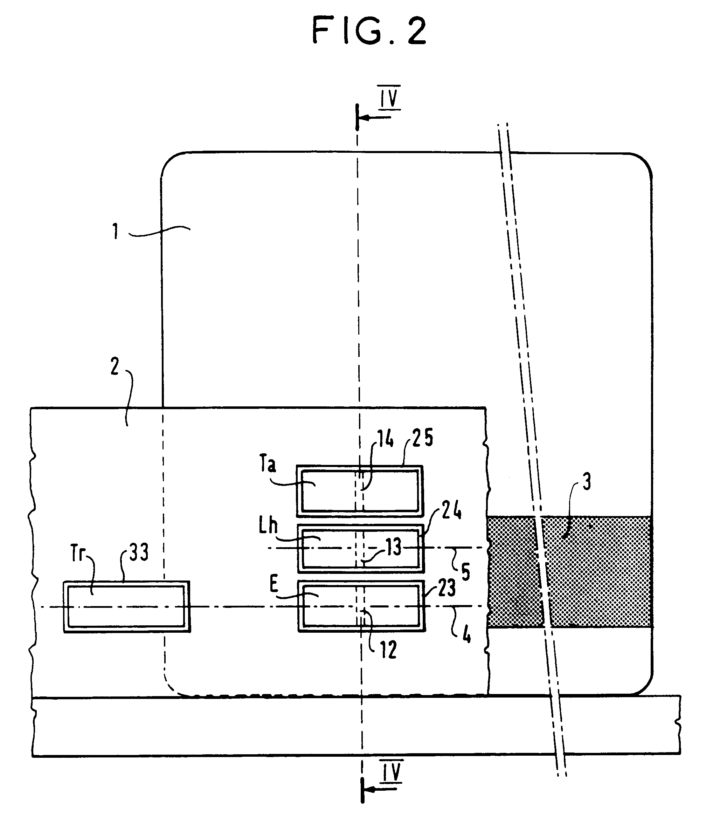

Comme on le voit sur la figure 1 et mieux sur la figure 2, la tête magnétique auxiliaire Tₐ est située en dehors de la zone 3 encrée magnétiquement donc en dehors des pistes d'axes 4 et 5.

Néanmoins, pour que la perturbation apportée par la tête d'écriture E à la tête de lecture Lₕ soit la plus faible possible, les têtes de lecture Lₕ et d'écriture E sont blindées et évidemment aussi la tête auxiliaire de compensation Tₐ. C'est ce que l'on a voulu représenter en 23, 24 et 25 sur la figure 2. Un tel blindage est en soi classique et n'est pas décrit plus amplement.

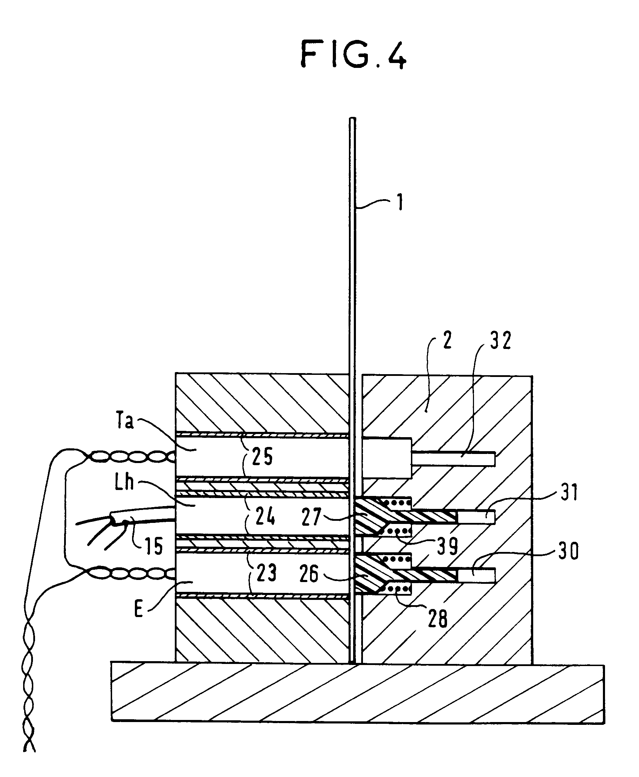

La figure 4 montre que les têtes E, Lₕ et Tₐ sont montées dans le bloc lecteur-enregistreur 2 qui comporte deux patins presseurs 26 et 27 poussés par des ressorts 28 et 29 contre la tête d'écriture E et la tête de lecture Lₕ. Ces patins sont placés dans des logements 30 et 31 et sont en matériau isolant. Afin de ne pas rompre la symétrie et donc la compensation apportée par la tête magnétique auxiliaire Tₐ, un logement 32 est également effectué dans le bloc métallique 2 en face de la tête auxiliaire Tₐ. Ce logement Tₐ est identique aux logements 30 et 31 mais il est dépourvu de patin presseur.

La tête magnétique auxiliaire Tₐ a également par rapport à la tête de relecture Tᵣ un certain effet ayant tendance à amoindrir la perturbation qu'elle subit de la part de la tête d'écriture E bien que cette tête auxiliaire ne soit pas symétrique de la tête d'écriture par rapport à l'axe 4 de la piste magnétique d'écriture devant laquelle se trouve la tête de relecture Tᵣ, si bien que cette tête de relecture peut être relativement proche de la tête d'écriture, réduisant ainsi la longueur de l'appareil. La tête de relecture Tᵣ comporte également un blindage 33. Ainsi avec un piste magnétique à très haute coercitivité telle que Hc = 4000 Oersted par exemple et avec une tête d'écriture E alimenté à environ 1,4 Ampère, on peut réduire la distance séparant les entrefers des têtes E et Tᵣ jusqu'à environ 20 mm.

Nous rappelons que l'invention, particulièrement intéressante pour des pistes magnétiques à très haute coercitivité est aussi applicable dans les cas de pistes à coercitivité plus faible. De la même façon, l'invention, décrite dans le cadre d'un appareil à entraînement manuel de la carte 1 peut également s'appliquer à un dispositif à entraînement motorisé dès lors que la tête d'écriture est synchronisée par le moyen d'une tête de lecture lisant une piste magnétique de synchronisation.

## Revendications

**1)** Ensemble pour l'écriture magnétique d'un message codé de précision sur un document (1) porteur d'une piste d'écriture magnétique (4), l'écriture étant effectuée à saturation sous la forme d'un code binaire, comportant une tête magnétique d'écriture (E) comprenant un circuit magnétique (6) à entrefer (12) équipé d'un enroulement d'écriture (7) recevant les signaux électriques d'écriture, l'envoi desdits signaux étant synchronisés par le moyen d'une tête magnétique de lecture (Lₕ) comportant un circuit magnétique (8) à entrefer (13) équipé d'un enroulement de lecture (9), ladite tête de lecture (Lₕ) lisant une piste magnétique pré-encodée (5) de telle sorte qu'on puisse en extraire des signaux de synchronisation, lesdites pistes magnétiques d'écriture (4) et pré-encodée (5) étant parallèles et voisines l'une de l'autre, caractérisé en ce qu'il comporte en outre une tête magnétique auxiliaire (Tₐ), comportant un circuit magnétique (10) à entrefer (14) équipé d'un enroulement électrique (11), la tête magnétique auxiliaire (Tₐ) étant disposée symétriquement de la tête magnétique d'écriture (E) par rapport à l'axe (5) de ladite piste magnétique pré-encodée, lesdites têtes d'écriture (E) et auxiliaire (Tₐ) étant identiques et leur enroulement respectif (7, 11) recevant le même courant, le sens de passage respectif dudit courant dans l'enroulement respectif de ces deux têtes magnétiques étant déterminé de façon à produire respectivement, au niveau de l'entrefer (13) de la tête de lecture (Lₕ), un champ de même intensité et de sens opposé.

**2)** Ensemble selon la revendication 1, caractérisé en ce que les trois dites têtes magnétiques sont blindées (23, 24, 25).

**3)** Ensemble selon l'une des revendications 1 ou 2, caractérisé en ce que les trois dites têtes sont logées dans un bloc support métallique (2), un patin presseur (26, 27) en matériau isolant, poussé par un ressort (28, 29) vers ledit document (1), étant disposé de l'autre côté dudit document (1) par rapport aux trois dites têtes magnétiques, (E, Lₕ, Ta) en face de la tête d'écriture (E) et en face de la tête de lecture (Lh), chaque patin (26, 27) étant logé dans un évidemment (30, 31) du support (2), un évidement identique (32) mais dépourvue de patin étant effectuée dans ledit support (2) en face de ladite tête magnétique auxiliaire (Tₐ).

**4)** Ensemble selon l'une des revendications précédentes, caractérisé en ce que les trois têtes magnétiques (Lₕ, Tₐ et E) sont alignés.
